# EUROPEAN PATENT APPLICATION

(11) **EP 1 886 785 A1**
(43) Date of publication of application: **13.02.2008**
(21) Application number: 06756722.2
(22) Date of filing: 30.05.2006
(51) Int. Cl.: B29C 33/38, B29C 33/42, B29L 11/00

(54) **METHOD FOR PRODUCING DIE AND MOLDING OBTAINED BY IT**

(30) Priority: 03.06.2005 JP 2005164283
(71) Applicant: ALPS ELECTRIC CO., LTD., Tokyo 145-8501 (JP)
(72) Inventor: ABE, Munemitsu c/o Alps Electric Co., Ltd., Tokyo 1458501 (JP); TAKAMURA, Shozo c/o Alps Electric Co., Ltd., Tokyo 1458501 (JP); SHIMIZU, Satoru c/o Alps Electric Co., Ltd., Tokyo 1458501 (JP); SHINOHARA, Eiji c/o Alps Electric Co., Ltd., Tokyo 1458501 (JP)
(74) Representative: Klunker . Schmitt-Nilson . Hirsch
(86) International application number: PCT/JP2006/310726
(87) International publication number: WO 2006/129633

(57) **Abstract**

A substrate 11 is patterned by photolithography to make a first original plate. Next, the pattern 11a of the first original plate is transferred to make a second original plate 12. Next, the second original plate 12 is machined to make a die. Further, the pattern 12b of the second original plate 12 is transferred to make a third original plate 13, which is used as a die. This provides a method for manufacturing a die by which a special shape, for example, a shape having a high aspect ratio portion can be easily formed and a molding obtained therewith.

## Description

### Technical Field

The present invention relates to a method for manufacturing a die and a molding obtained therewith, and more specifically, it relates to a method for manufacturing a die using photolithography and machining and a molding obtained therewith.

### Background Art

With recent reduction in size, thickness, and weight of electronics, it is hoped that special shapes, for example, a shape having a high aspect ratio portion will be realized. Specifically, formation of, for example, a deep groove having an arbitrarily shaped protrusion in the bottom thereof is hoped. It is obvious that electronics will be further reduced in size, thickness, and weight, and it is expected that the demands for these special shapes will increase further. In anticipation of these demands, approaches to realizing the above special shapes, for example, fabrication of a fine structure by photolithography using X-ray and accuracy improvement in machining, are increasingly active.

### Disclosure of the Invention

### Problems to be Solved by the Invention

However, when the above special shapes are formed by machining, the cutting tool size of processing machine is a problem. It is difficult to process a pattern less than 100 µm in width. In addition, it is difficult to process, by machining, what has an aspect ratio of one or more on the order of magnitude of micrometers. On the other hand, when the above special shapes are formed by photolithography, the processing accuracy in the depth direction can vary about several percent. In addition, photolithography is disadvantageous in that the controllability in processing an arbitrary shape such as a tapered shape or a curved shape is poor.

The present invention is made in consideration of such points, and an object of the present invention is to provide a method for manufacturing a die by which a special shape, for example, a shape having a high aspect ratio portion can be easily formed, and a molding obtained therewith.

### Means for Solving the Problems

In an aspect of the present invention, a method for manufacturing a die includes the steps of patterning a substrate by photolithography to make a first original plate, transferring the pattern of the first original plate to make a second original plate, and machining the second original plate to make a die.

According to this method, photolithography is used for forming, for example, a high aspect ratio portion in a fine structure, and machining is used for processing an arbitrary shape in the fine structure with a high degree of accuracy. Therefore, a special shape, for example, a shape having a high aspect ratio portion can be easily formed.

In another aspect of the present invention, a method for manufacturing a die includes the steps of forming a depression in a substrate to make a first original plate, transferring the pattern of the first original plate to make a second original plate having a protrusion corresponding to the depression, and machining the protrusion of the second original plate to make a die.

According to this method, the protrusion of the second original plate corresponding to the depression of the first original plate is machined. Therefore, this method makes possible complex microfabrication of a side surface or a bottom surface in a fine depression smaller than the size of the cutting tool in machining.

The method for manufacturing a die of the present invention preferably includes the step of transferring the pattern that the die has to make a third original plate, and it is preferable that the third original plate be used as a die or a mother die of a die. According to this method, using the third original plate as a mother die makes it possible to obtain a die with which, for example, a stripe groove or a fine depression or protrusion can be formed, to an accuracy of machining, in a tapered surface or a bottom surface of a fine structure that cannot be processed by machining, for example, a fine structure smaller than the size of the cutting tool used for machining. As a result, it is possible to significantly expand the limit of die processing.

A molding of the present invention is molded using the above die or a die obtained using the above mother die. The molding of the present invention preferably includes a relatively high aspect ratio portion.

### Advantages

According to the method of the present invention, a depression is formed in a substrate to make a first original plate, the pattern of the first original plate is transferred to make a second original plate having a protrusion corresponding to the depression, and the protrusion of the second original plate is machined to make a die. Therefore, a special shape, for example, a shape having a high aspect ratio portion can be easily formed, and a fine depression or protrusion can be easily formed by machining with a high degree of accuracy in a tapered surface or a bottom surface of a fine structure smaller than the size of the cutting tool for machining.

### Best Mode for Carrying Out the Invention

Photolithography and machining have advantages and disadvantages. That is, photolithography is advantageous to processing a micropattern or a large area at once and to processing a special shape. Currently, a micropattern of several tens of nanometers in width can be formed. In addition, photolithography enables one to process a large range at once and to form a special shape in which the same portion needs to be processed more than once, for example, a grating shape, and a shape having an aspect ratio of more than 10. On the other hand, machining is advantageous to processing with high dimensional accuracy and to processing with small surface roughness. Machining enables processing with very small dimensional variation.

The inventors focused attention on the above-described points, found that a special shape, for example, a shape having a high aspect ratio portion could be easily formed by fusing the fine patterning by photolithography and the high-accuracy processing by machining and thereby compensating for the disadvantage of photolithography with machining and compensating for the disadvantage of machining with photolithography, and made the present invention.

That is, the gist of the present invention is to easily form a special shape, for example, a shape having a high aspect ratio portion by forming a depression in a substrate to make a first original plate, transferring the pattern of the first original plate to make a second original plate having a protrusion corresponding to the depression, and machining the protrusion of the second original plate to make a die.

Embodiments of the present invention will now be described with reference to the accompanying drawings in detail. The method for manufacturing a die according to the present invention includes the steps of patterning a substrate by photolithography to make a first original plate, transferring the pattern of the first original plate to make a second original plate, and machining the second original plate to make a die.

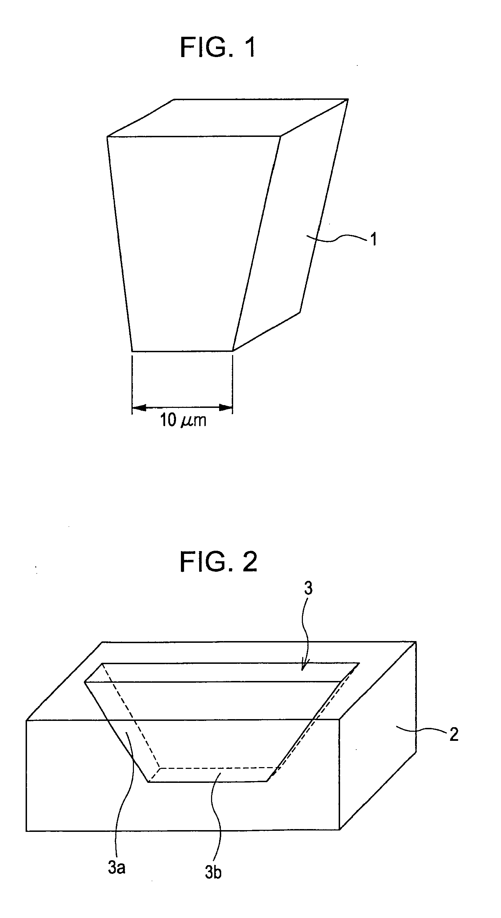

The method according to the present invention makes it possible to machine a fine structure that cannot be processed with an ordinary cutting tool 1 (whose tip width is normally 100 µm or more) used for machining and shown in FIG. 1. That is, it is impossible to finely process (for example, to form fine depressions and/or protrusions in) tapered surfaces 3a and a bottom surface 3b of a depression 3 formed in a substrate 2 shown in FIG. 2 by machining using the cutting tool 1 shown in FIG. 1. The method according to the present invention makes it possible to make a substrate 2 whose tapered surfaces 3a and bottom surface 3b in a depression 3 are finely processed.

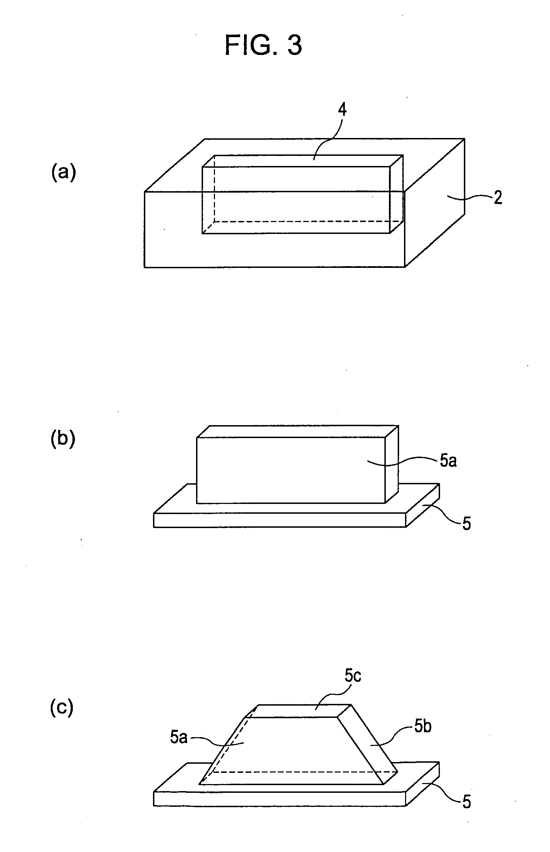

In the method according to the present invention, a depression 4 is formed in a substrate 2 to make a first original plate as shown in FIG. 3 (a), the pattern (depression 4) of the first original plate is transferred to make a second original plate 5 having a protrusion 5a corresponding to the depression 4 as shown in FIG. 3 (b), and the protrusion 5a of the second original plate 5 is machined to form tapered surfaces 5b and a top surface 5c in the protrusion 5a as shown in FIG. 3 (c). Further, the tapered surfaces 5b and the top surface 5c are finely processed. Since the machining is performed on the protruding portion 5a of the second original plate 5, the machining can be performed regardless of the size of the cutting tool 1. By thereafter transferring the machined pattern (protrusion 5a) of the second original plate 5 to make a third original plate, a substrate 2 having the desired shape shown in FIG. 2 can be obtained.

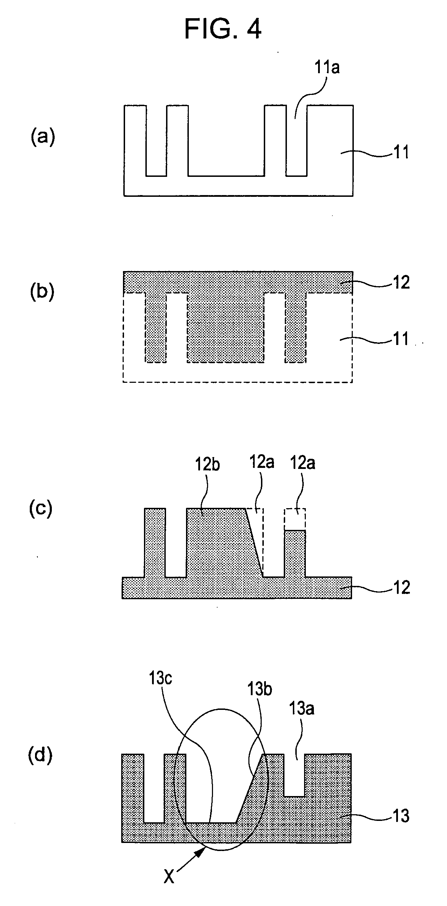

The method according to the present invention will be described in more detail. First, in the step of making the first original plate, the substrate is patterned by photolithography as shown in FIG. 4 (a). A resist layer (not shown) is formed on a substrate 11. The resist layer is hardened by being irradiated with light through a mask having a predetermined pattern. Thereafter, the resist layer is developed to form a resist layer corresponding to the predetermined pattern on the substrate 11. The substrate 11 is etched using the patterned resist layer as a mask. Thereafter, the resist layer remaining on the substrate 11 is removed to form a pattern 11a (depressed pattern in this case) on the substrate 11. Not only the semiconductor technology, in which two-dimensional fabrication is mainly performed, but also the MEMS (Micro ElectroMechanical System) technology, in which three-dimensional fabrication is performed, is utilized for the photolithography.

A silicon substrate or a plastic substrate such as a resist layer or an acrylic substrate can be used as the substrate 11. Wet etching, dry etching, isotropic etching, or anisotropic etching can be used as etching. Various resists such as a negative resist or a positive resist can be used as a resist forming the resist layer.

By forming the pattern 11a in the substrate 11 by photolithography in this way to make a first original plate 11, a fine shape or a shape having a high aspect ratio (shape having a relatively high aspect ratio of, for example, one or more on the order of magnitude of micrometers) can be easily formed in the first original plate.

Next, in the step of making the second original plate, the pattern 11a of the first original plate is transferred as shown in FIG. 4 (b). A method including transferring a pattern to a metal layer or a plastic layer using metal electroforming or plastic molding can be used as a method for transferring the pattern of the first original plate. For example, by electroforming nickel on a silicon substrate or a plastic substrate that is a substrate 11 in which a pattern 11a is formed as described above, and peeling the silicon substrate from the nickel plate formed by electroforming, the pattern can be transferred to the nickel plate that is a transfer layer. Alternatively, by forming a silicon carbide plate on a silicon substrate patterned as described above and then dissolving the silicon substrate, the pattern can be transferred to the silicon carbide plate. The detail of this method is disclosed in Toru Itoh et al., "SILICON CARBIDE MICROFABRICATION BY SILICON LOST MOLDING FOR GLASS PRESS MOLDS," Technical Digest of Transducers 2003, 2A2.4, pp. 254-257. The content of this document is included in this specification for reference.

By transferring the pattern 11a of the first original plate in this way to make a second original plate 12, the below-described machining can be performed without limitation due to the size of the cutting tool. If, for example, a depressed shape having a high aspect ratio is formed in the first original plate, the pattern 11a is inverted by being transferred to the second original plate 12 and appears as a protruding shape. Therefore, even if the size of the depression is small, it is possible to machine the inverted protruding pattern 11a.

Next, in the step of making a die, the second original plate is machined as shown in FIG. 4 (c). As described above, if, for example, a depressed shape having a high aspect ratio is formed in the first original plate, it appears as a protruding pattern 12b in the second original plate 12. Therefore, this protruding pattern 12b can be easily machined. This makes it possible to form a tapered shape or a curved shape in the pattern 12b of the second original plate 12 with a high degree of accuracy, for example, a high degree of accuracy of ±1/100° or more accurate in taper angle. That is, a part 12a of the pattern 12a can be removed with a high degree of accuracy. The term "machining" here refers to ordinary machining using a cutting tool.

After machined, the second original plate 12 can be used as a die. By performing molding with this die, a molding having a specially shaped portion, for example, a high aspect ratio portion can be obtained. The machined second original plate 12 itself can also be used as a processed article (processed article having a high aspect ratio protrusion in this case). According to the above-described method, photolithography is used for forming, for example, a high aspect ratio portion in a fine structure, and machining is used for processing an arbitrary shape in the fine structure with a high degree of accuracy. Therefore, a special shape, for example, a shape having a high aspect ratio portion can be easily formed. According to this method, a portion requiring high-accuracy processing is machined but the whole is not machined. Therefore, the manufacturing process time can be shortened.

It is possible to transfer the pattern 12b of the second original plate 12 to make a third original plate 13 as shown in FIG. 4 (d) and to use the third original plate 13 as a die or a mother die of a die. That is, a die may be obtained by transferring the pattern 13a to another material using this third original plate 13 as a mother die, or the third original plate 13 may be used as a die. Since the pattern 12b of the second original plate 12 machined with a high degree of accuracy is transferred to this third original plate 13, the third original plate 13 can have an arbitrarily shaped portion, such as portion X in FIG. 4 (d), in its fine structure. That is, the third original plate 13 has a pattern 13a including a tapered surface 13b and a bottom surface 13c finely processed with a high degree of accuracy, which cannot be realized by conventional arts. Therefore, by making a die using such a third original plate 13 as a mother die and performing molding with the die, a molding having a specially shaped portion, for example, a high aspect ratio portion can be obtained.

Methods for transferring the pattern 12b of the second original plate 12 to the third original plate 13 include the following methods. For example, in the case where the second original plate 12 is a nickel plate, another nickel plate is formed by electroforming nickel directly on the nickel plate or with a mold release layer therebetween, and thereafter the nickel plates are separated to transfer the pattern to the nickel plate that is the third original plate. In this case, the liquid composition in nickel electroforming may be appropriately changed to change the hardness of the nickel plate to prevent burr formation in the third original plate. In the case where the second original plate 12 is a silicon carbide plate, another silicon carbide plate is formed on the silicon carbide plate with a mold release layer therebetween, and the mold release layer is selectively dissolved to transfer the pattern to the silicon carbide plate that is the third original plate.

As described above, also in the case where the third original plate 13 is used as a mother die, since the second original plate 12 is used, it is possible to obtain a die with which, for example, a stripe groove or a fine depression or protrusion can be formed, to an accuracy of machining, in a tapered surface 13b or a bottom surface 13c of a fine structure that cannot be processed by machining and that is smaller than the size of the cutting tool used for machining. As a result, it is possible to significantly expand the limit of die processing.

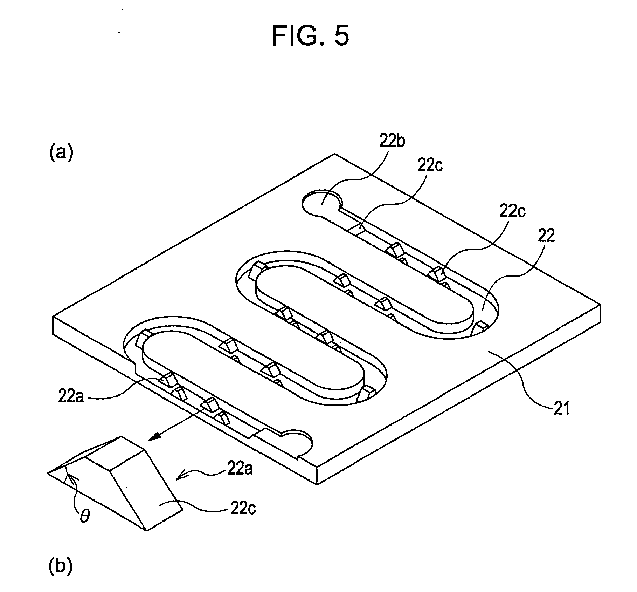

The method for manufacturing a die of the present invention can be applied, for example, to the manufacture of a die of a microchannel or a microlens array. FIG. 5 (a) illustrates a microchannel obtained by a method for manufacturing a die according to an embodiment of the present invention. FIG. 5 (b) is an enlarged view showing a protruding part in (a).

The microchannel 22 shown in FIG. 5 (a) is about 10 µm in width and about 20 µm in depth and is formed in a substrate 21. A plurality of protrusions 22a are provided in this microchannel 22. In addition, shallow bottom surfaces 22b and tapered surfaces 22c are formed in this microchannel 22. Such a microchannel 22 having the protrusions 22a, shallow bottom surfaces 22b, and tapered surfaces 22c cannot be formed by machining. As for photolithography, the taper angle θ shown in FIG. 5 (b) cannot be freely set. In the case where the microchannel 22 shown in FIG. 5 is obtained in the substrate 21 by the method of the present invention, a groove corresponding to the microchannel 22 is formed by photolithography in a substrate that is a first original plate, and the pattern is transferred to a second original plate. At this time, the groove portion corresponding to the microchannel 22 appears as a protrusion. In this protrusion, depressions corresponding to the protrusions 22a are formed by machining. By performing molding using the machined second original plate as a die and using the material of the substrate 21, a substrate 21 having a microchannel 22 can be obtained.

In the case where a microlens array is obtained by the method of the present invention, depressions corresponding to a plurality of lenses are formed by photolithography in a substrate that is a first original plate, and the pattern is transferred to a second original plate. At this time, the depressions corresponding to the lenses appear as protrusions. Finish processing (mirror-like finishing) of these protrusions is performed by machining. By performing molding using the machined second original plate as a die and using the material of the lens array, a microlens array can be obtained. When the depressions corresponding to the lenses are formed by photolithography, the amount of light (light exposure) to which the photosensitive resin (resist) is exposed is changed depending on place. This makes the thickness of the photosensitive resin after development different depending on place according to the light exposure, thereby forming curved surfaces in the depressions corresponding to the lenses.

The present invention is not limited to the above-described embodiments, and various changes can be made therein. For example, the present invention is not limited to the sizes, numerical values, and materials described in the above-described embodiments. Although the method of the present invention is applied to a microchannel and a microlens array in the above-described embodiments, the present invention is not limited to this. The present invention can be applied to forming various shapes that cannot be formed by photolithography alone or machining alone, for example, a lens, a Fresnel lens, a reflecting mirror, or a groove for an optical fiber, and combination of these, and combination of these and a microchannel and/or a microlens array. Various other changes can be made without departing from the scope of the present invention.

### Brief Description of the Drawings

FIG. 1 is a schematic view showing a cutting tool used for machining.
FIG. 2 illustrates a shape obtained by a method for manufacturing a die according to the present invention.
FIGS. 3 (a) to 3 (c) illustrate a method for manufacturing a die according to an embodiment of the present invention.
FIGS. 4 (a) to 4 (d) illustrate a method for manufacturing a die according to an embodiment of the present invention.
FIG. 5 (a) illustrates a microchannel obtained by a method for manufacturing a die according to an embodiment of the present invention. FIG. 5 (b) is an enlarged view showing a protrusion in FIG. 5 (a).

### Reference Numerals

- 1: cutting tool
- 2, 11: substrate (first original plate)
- 3, 4: depression
- 3a, 5b, 13b, 22c: tapered surface
- 3b, 13c, 22b: bottom surface
- 5, 12: second original plate
- 5a: protrusion
- 5c: top surface
- 11a, 12b, 13a: pattern
- 13: third original plate
- 21: substrate
- 22: microchannel
- 22a: protrusion

## Claims

1. A method for manufacturing a die, comprising the steps of: patterning a substrate by photolithography to make a first original plate; transferring the pattern of the first original plate to make a second original plate; and machining the second original plate to make a die.

2. A method for manufacturing a die, comprising the steps of: forming a depression in a substrate to make a first original plate; transferring the pattern of the first original plate to make a second original plate having a protrusion corresponding to the depression; and machining the protrusion of the second original plate to make a die.

3. The method for manufacturing a die according to Claim 1, further comprising the step of transferring the pattern that the die has to make a third original plate, wherein the third original plate is used as a die or a mother die of a die.

4. The method for manufacturing a die according to Claim 2, further comprising the step of transferring the pattern that the die has to make a third original plate, wherein the third original plate is used as a die or a mother die of a die.

5. A molding molded using a die, the die being obtained by the steps of: patterning a substrate by photolithography to make a first original plate; transferring the pattern of the first original plate to make a second original plate; and machining the second original plate to make a die.

6. A molding molded using a die, the die being obtained by the steps of: forming a depression in a substrate to make a first original plate; transferring the pattern of the first original plate to make a second original plate having a protrusion corresponding to the depression; and machining the protrusion of the second original plate to make a die.

7. The molding according to Claim 5, including a relatively high aspect ratio portion.

8. The molding according to Claim 6, including a relatively high aspect ratio portion.

9. The molding according to Claim 5, including at least one selected from a group consisting of a microchannel, a microlens array, a lens, a Fresnel lens, a reflecting mirror, and a groove for an optical fiber.

10. The molding according to Claim 6, including at least one selected from a group consisting of a microchannel, a microlens array, a lens, a Fresnel lens, a reflecting mirror, and a groove for an optical fiber.
